# EUROPÄISCHE PATENTSCHRIFT

(11) **EP 1 586 932 B1**
(45) Veröffentlichungstag und Bekanntmachung des Hinweises auf die Patenterteilung: **28.05.2008**
(21) Anmeldenummer: 05106599.3
(22) Anmeldetag: 20.12.2003
(51) Int. Cl.: G02B 23/12

(54) **Nachtsichtsystem für Kraftfahrzeuge**
Night vision system for vehicles
Système actif de vision nocturne pour véhicule automobile

(43) Veröffentlichungstag der Anmeldung: 19.10.2005
(62) Teilanmeldung aus: 03029516.6
(73) Patentinhaber: Hella KGaA Hueck & Co., 59552 Lippstadt (DE)
(72) Erfinder: Bierleutgeb, Gerhard, 59597, Erwitte (DE)

(56) Entgegenhaltungen:
- WO-A-01/37000
- FR-A- 2 661 268
- US-A- 5 555 324
- W. THORNTON: "Night vision system has brilliant future" INTERNET ARTICLE, [Online] - 26. September 2002 (2002-09-26) Seite 1, XP002270806 Gefunden im Internet: URL:http://web.archive.org/web/20020926101 826/http://www.clarechampion.ie/01/aug/cc2 0010824/fe_nv.htm> [gefunden am 2004-02-18]

## Beschreibung

Die Erfindung bezieht sich auf ein Infrarot-Nachtsichtsystem für Kraftfahrzeuge.

Ein derartiges System ist beispielsweise aus der DE 695 06 174 T2 bekannt. Dort wird ein mit einer Infrarot-Kamera aufgenommenes Bild über ein Head-Up-Display in die Windschutzscheibe projiziert. Um die Aufmerksamkeit des Fahrers auf die wärmsten, weil angeblich wichtigsten Objekte, zu lenken, kann der Videoprozessor der Kamera in einen sogenannten Objektnachsweis-Modus gebracht werden, indem durch Einstellung eines Schwellwertes schwache (kalte) Signale unterdrückt werden, um lediglich die wärmeren Objekte darzustellen.

Das System gemäß DE 695 06 174 T2 hat jedoch zwei entscheidende Nachteile. Zum einen sind es nicht immer die wärmern Objekte, die hinsichtlich einer Kollision gefährlich sein können. Zum anderen gehen in dem Objektnachweise-Modus die Informationen über die Umgebung der wärmeren Objekte herum verloren.

FR 2 661 268 A1 offenbart ein Nachtsichtsystem für Kraftfahrzeuge mit einem Infrarotstrahlungssender zur Erzeugung einer aktiven IR-Beleuchtung, wobei ein Bild im infraroten und ein Bild im sichtbaren Bereich aufgenommen wird. In einer Ausführungsform sind hierzu zwei Kameras vorgesehen, wobei die eine Kamera mit einem optischen Bandpass-Filter ausgestattet ist. In einer anderen Ausführungsform werden vor eine Kamera wechselweise zwei unterschiedliche optische Filter vorgeschaltet.

Aufgabe der Erfindung ist es, ein Infrarot-Nachtsichtsystem zu schaffen, das in verbesserter Weise auf wichtige Objekte im Infrarot-Bild aufmerksam macht.

Diese Aufgabe wird durch die Merkmale des Patentanspruches 1 gelöst.

Die Grundidee der Erfindung besteht darin, mindestens zwei Bilder aufzunehmen, die mit Licht/Strahlung aus zumindest teilweise unterschiedlichen Wellenlängenbereichen belichtet werden, wobei zumindest einer der Wellenlängenbereiche zumindest teilweise im infraroten Bereich liegt. Anschließend werden die beiden Bilder in einer Bildverarbeitungseinheit miteinander verknüpft, vorzugsweise verglichen. Dabei wird die Anzeige- und Wameinheit in Abhängigkeit vom Ergebnis der Verknüpfung angesteuert.

Die beiden Bilder enthalten zumindest teilweise unterschiedliche Bildinformationen, da sie mit Licht aus unterschiedlichen Wellenlängenbereichen aufgenommen wurden. Durch die Verknüpfung der Bildinformationen dieser beiden Bilder kann somit gezielter auf wichtige Objekte in einem IR-Bild aufmerksam gemacht werden als dies bei einem herkömmlichen Nachtsichtsystem der Fall ist, wo nur die Bildinformationen eines Bildes ausgewertet werden, da beim erfindungsgemäßen Nachtsichtsystem die Ansteuerung der Anzeige- und Warneinheit unter Auswertung von zusätzlichen Bildinformationen erfolgt.

Dabei wird - im Unterschied zum System gemäß DE 695 06 174 T2 - ein Nachtsichtsystem mit einer aktiven IR-Beleuchtung verwendet, so daß man zur Sichtbarmachung von Objekten nicht auf die Eigenwärme derselben angewiesen ist. Dabei wird mit mindestens einer Kamera ein erstes Bild ohne Belichtung mit aktiver IR-Beleuchtung, d.h. nur mit normaler Scheinwerferbeleuchtung, aufgenommen. Zusätzlich wird ein zweites Bild unter Belichtung mit aktiver IR-Beleuchtung aufgenommen.

Ein mit einem Nachtsichtsystem aufgenommenes IR-Bild enthält neben den Bildinformationen, die nur über das Nachtsichtsystem wahrnehmbar sind, redundante Bildinformationen, die bei normaler Scheinwerferbeleuchtung auch mit dem bloßen Auge wahrgenommen werden. Insbesondere die Überfrachtung des IR-Bildes mit diesen redundanten Informationen macht es für den Fahrer schwierig, die wirklich wichtigen Bildinformationen, die nur in dem IR-Bild vorhanden sind, schnell wahrzunehmen.

Beim erfindungsgemäßen Nachtsichtsystem können relevante Objekte vor dem Fahrzeug, die der Fahrer nur mit einem Nachtsichtsystem wahrnehmen kann, durch Verknüpfung der Bildinformationen der beiden Bilder (mit und ohne IR-Belichtung) in effektiver Weise herausgefiltert werden. Die Anzeige- oder Wameinheit wird dann in Abhängigkeit vom Ergebnis der Verknüpfung angesteuert. Somit wird die Aufmerksamkeit des Fahrers besonders auf relevante Objekte gerichtet, die nur mittels Nachtsichtsystem wahrnehmbar sind.

Die Verknüpfung der beiden Bilder in der Bildverarbeitungseinheit besteht vorzugsweise in einem Vergleich der beiden Bilder, wobei durch den Vergleich der beiden Bilder Bildinformationen extrahiert werden, die nur in dem mit IR-Belichtung aufgenommenen Bild vorhanden sind. Dabei besteht der Vergleich der beiden Bilder in der Bildverarbeitungseinheit vorzugsweise darin, daß die beiden Bilder zur Erzeugung eines Differenzbildes voneinander subtrahiert werden, indem die Helligkeitswerte korrespondierender Bildpunkte oder die Helligkeitsmittelwerte korrespondierender Bildpunktecluster (Hyperpixel) voneinander subtrahiert werden.

In einer Ausführungsvariante wird immer dann, wenn durch den Vergleich der beiden Bilder ein relevantes Objekt detektiert wird, das nur bei IR-Belichtung detektierbar war, einfach nur ein akustisches und/oder optisches Warnsignal erzeugt.

In einer weiteren Ausführungsvariante wird ein Warnsignal an ein automatisches Fahrerassistenz-System, z.B. ein automatisches Abstandsregel-System (Adaptive Cruise Control) gegeben.

In einer weiteren Ausführungsvariante wird das Differenzbild markiert, wobei das Differenzbild die Bildinformationen enthält, die nur in dem mit IR-Belichtung aufgenommenem Bild vorhanden sind. Anschließend wird das markierte Differenzbild zur Erzeugung eines auf einem Display als Anzeigeeinheit anzuzeigenden Bildes möglichst konturgenau in ein Gesamtbild eingefügt. Man erhält auf diese Weise ein Bild der Szenerie vor dem Fahrzeug, wobei die Bildausschnitte, die nur mit IR-Belichtung wahrnehmbar sind, durch die Markierung hervorgehoben werden, während die Bildbereiche, die auch mit bei normaler Scheinwerferbeleuchtung für den Fahrer wahrnehmbar sind, weniger hervorgehoben werden, da sie nur zur Orientierung und Einbettung des markierten Bildes in eine Gesamtszenerie dienen. Die Markierung kann z.B. in einer Einfärbung oder Umrandung des Differenzbildes bestehen. Bei dem Gesamtbild, in das das Differenzbild eingefügt wird, kann es sich um das mit IR-Belichtung aufgenommene Bild oder aber auch um das ohne IR-Belichtung, d.h. nur mit Scheinwerfer-Beleuchtung, aufgenommene Bild handeln.

Es ist vorgesehen, die beiden Bilder (mit und ohne IR-Belichtung) vor der Verknüpfung separat einer Bildvorverarbeitung zu unterziehen, wo die Bilder jeweils für sich z.B. hinsichtlich Helligkeit, Kontrast etc. auf vorbestimmte Ausgangswerte für den Vergleich angepasst (normiert) werden können.

Anhand der Zeichnungen soll die Erfindung nachfolgend verdeutlicht werden.

Es zeigt:
- Fig. 1- 4: Blockschaltbilder verschiedener Ausführungsformen des erfindungsgemäßen Nachtsichtsystems
- Figur 5: jeweils ein Bild mit und ohne aktiver IR-Belichtung sowie das Differenzbild,
- Figur 6: die spektrale Empfindlichkeit einer Kamera, die sowohl im sichtbaren als auch im nahen IR-Bereich empfindlich ist.

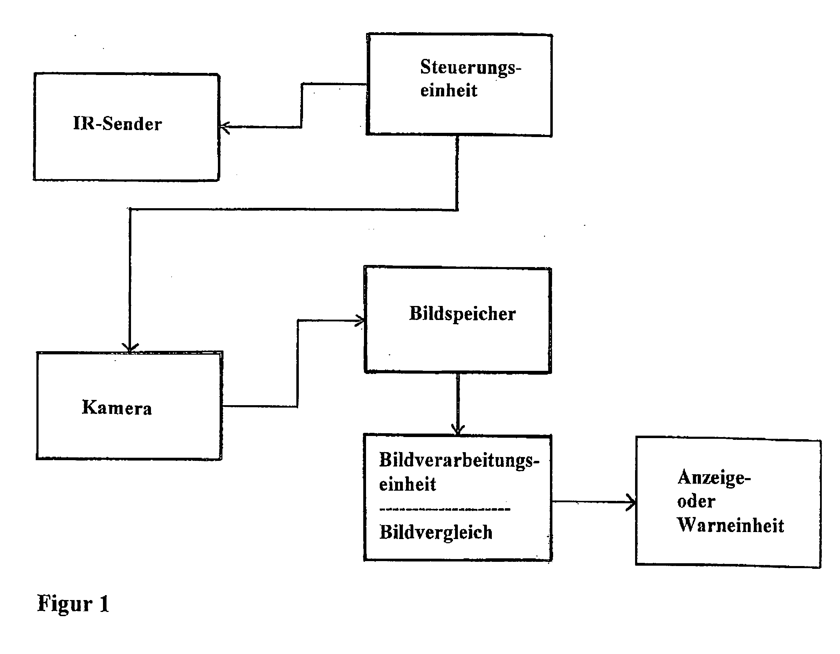

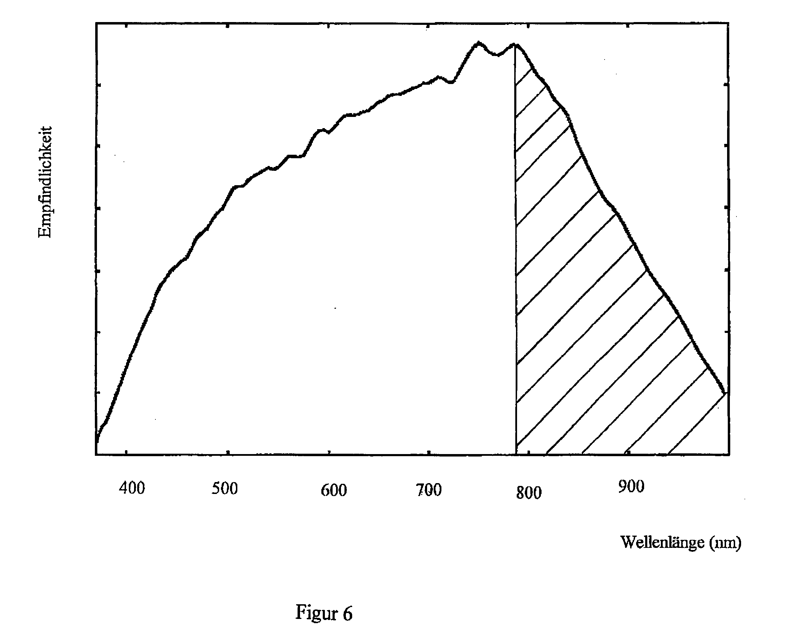

**Figur 1** zeigt das Blockschaltbild einer ersten, erfindungsgemäßen Ausführungsform des Nachtsichtsystems mit nur einer ("digitalen") Kamera, die sowohl für sichtbares Licht als auch für Licht aus dem nahen IR-Bereich empfindlich ist. Dabei kommt vorzugsweise eine Kamera mit einem lichtempfindlichen Halbleitersensor in Form eines zweidimensionalen Arrays bestehend aus einer Vielzahl von Sensor-Pixeln zum Einsatz. Der Einsatz einer derartigen Kamera gestattet in einfacher Weise die digitale Weiterverarbeitung der Bildinformationen der einzelnen Pixel. In Figur 6 ist die typische spektrale Empfindlichkeit eines Halbleitersensors gezeigt, der in einer Kamera eingesetzt wird, die sowohl für sichtbares Licht als auch für Licht aus dem nahen IR-Bereich empfindlich ist. Dabei ist der sich an den sichtbaren Bereich anschließende nahe IR-Bereich schraffiert dargestellt. Eine Kamera mit einer derartigen Empfindlichkeit ist "blind" für Infrarotstrahlung, die auf der Eigenwärme von Objekten bei Umgebungstemperatur (-10°C bis + 30°C) basiert, da diese überwiegend im mittleren bis fernen IR-Bereich (> 3µm) abstrahlen. Ohne eine aktive IR-Beleuchtung im nahen IR-Bereich, würde eine solche Kamera nur mit sichtbarem Licht belichtet. Zur Realisierung einer aktiven IR-Beleuchtung für den nahen IR-Bereich ist ein IR-Sender, vorzugsweise eine IR-Diode, vorgesehen, die Licht im nahen IR-Bereich mit einem Emissionsmaximum zwischen 900nm und 1µm abstrahlt. Um abwechselnd ein Bild mit aktiver IR-Belichtung und ohne IR-Belichtung aufzunehmen, wird der IR-Sender getaktet, z.B. mit einer Taktfrequenz von 25Hz, betrieben, wobei die beiden Bilder bei einer Taktfrequenz von 25Hz bereits quasi simultan aufgenommen werden. Die getaktete Ansteuerung des IR-Senders erfolgt über eine Steuereinheit. Bei eingeschaltetem IR-Sender erfolgt dann eine Belichtung mittels Licht aus dem nahen IR-Bereich und mittels sichtbarem Licht, das hauptsächlich durch die Schweinwerfer erzeugt wird. Bei ausgeschaltetem IR-Sender erfolgt dann eine Belichtung nur mit sichtbarem Licht aufgrund der Scheinwerferbeleuchtung. Die so aufgenommenen Bilder - bzw. die digitalisierten Bildinformationen der einzelnen Pixel des Halbleitersensors- werden in einem Bildspeicher zwischengespeichert, bevor sie einer Bildverarbeitungseinheit für den Bildvergleich zugeführt werden. In Abhängigkeit vom Ergebnis dieses Bildvergleiches erfolgt nun eine Ansteuerung der Anzeige-/Warneinheit. Bei der Bildverarbeitungseinheit kann es sich um ein computerimplementiertes Programm oder aber auch um eine Hardwareschaltung handeln.

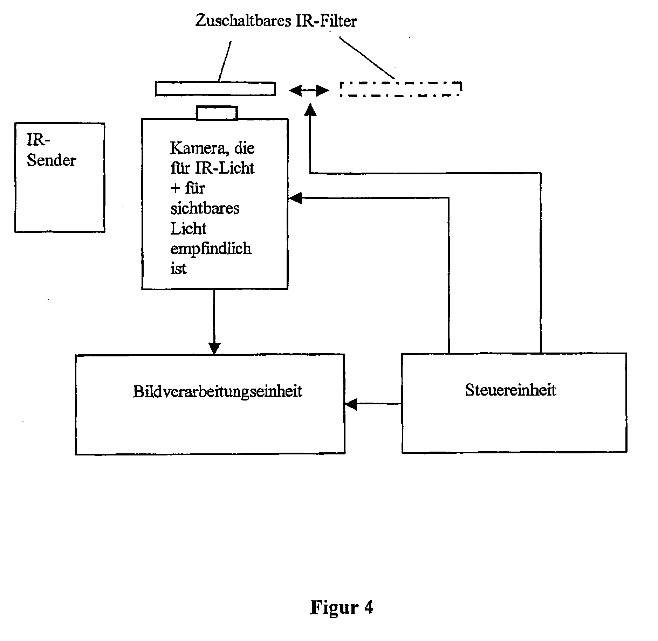

**Figur 4** zeigt das Blockschaltbild einer zweiten, nicht erfindungsgemäßen Ausführungsform des Nachtsichtsystems mit ebenfalls nur einer Kamera (vgl. erste Ausführungsform gemäß Fig. 1), die sowohl für sichtbares Licht als auch für Licht aus dem nahen IR-Bereich empfindlich ist. Im Unterschied zur ersten Ausführungsform wird hier der IR-Sender nicht getaktet betrieben, sondern kontinuierlich. Um nun abwechselnd ein Bild mit aktiver IR-Belichtung und ohne IR-Belichtung aufzunehmen, ist ein optisches Filter vorgesehen ist, das nur sichtbares Licht durchlässt, so dass die Belichtung der Kamera mit Hilfe des optischen Filters wahlweise mit infrarotem Licht ermöglicht oder verhindert wird. Das IR-Filter wird zu diesem Zweck zu- und abgeschaltet, indem es für eine Aufnahme ohne IR-Belichtung beispielsweise mechanisch vor das Kameraobjektiv gebracht wird und für eine Aufnahme mit IR-Belichtung wieder entfernt wird.

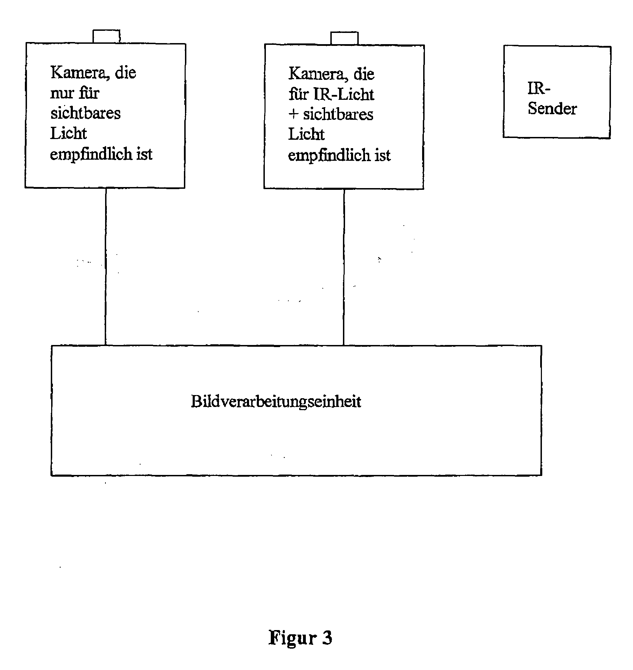

**Figur 3** zeigt das Blockschaltbild einer dritten, nicht erfindungsgemäßen Ausführungsform des Nachtsichtsystems mit zwei Kameras, von denen eine nur für sichtbares Licht empfindlich ist, während die andere für sichtbares Licht und für Licht aus dem nahen IR-Bereich empfindlich ist. Zur Realisierung einer aktiven IR-Beleuchtung für den nahen IR-Bereich ist ebenfalls ein IR-Sender vorgesehen. Bei einem kontinuierlichen Betrieb des IR-Senders kann mit dieser Ausführungsform gleichzeitig jeweils ein Bild nur mit Belichtung durch Licht aus dem sichtbaren Bereich und ein Bild mit Belichtung durch Licht aus dem sichtbaren Bereich und dem nahen IR-Bereich aufgenommen werden.

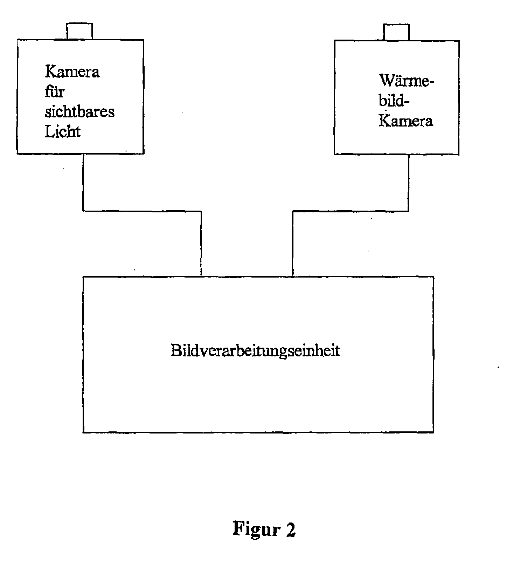

**Figur 2** zeigt das Blockschaltbild einer vierten, nicht erfindungsgemäßen Ausführungsform des Nachtsichtsystems, das in diesem Fall als passives System ausgelegt ist, wobei zwei Kameras vorgesehen sind, nämlich eine erste Kamera, die nur für sichtbares Licht empfindlich ist, und eine zweite Kamera in Form eines Wärmebildgerätes, die für Licht aus dem mittleren bis fernen IR-Bereich empfindlich ist. Derartige Wärmebildgeräte weisen beispielsweise ein Detektorarray in Form einer matrixartigen Anordnung von Mikrobolometern auf.

In der nachfolgenden Tabelle sind verschiedene Möglichkeiten für die Kombination von unterschiedlichen Wellenlängebereichen aufgeführt.

| Kombinationen | Bild 1 | Bild 2 |
|---|---|---|
| 1. | 1. Wellenlängenbereich: sichtbarer und naher IR-Bereich (380 nm bis 3 µm) | 2. Wellenlängenbereich: sichtbarer Bereich (380 nm bis 780 nm) |
| 2. | 1. Wellenlängenbereich: sichtbarer und naher IR-Bereich (380 nm bis 3 µm) | 2. Wellenlängenbereich: mittlerer bis ferner IR-Bereich (3 µm bis 12 µm) |
| 3. | 1. Wellenlängenbereich: sichtbarer und naher IR-Bereich (380 nm bis 3 µm) | 2. Wellenlängenbereich: naher IR-Bereich (780 nm bis 3 µm) |
| 4. | 1. Wellenlängenbereich: naher IR-Bereich (780 nm bis 3 µm) | 2. Wellenlängenbereich: sichtbarer Bereich (380 nm bis 780 nm) |
| 5. | 1. Wellenlängenbereich: naher IR-Bereich (780 nm bis 3 µm) | 2. Wellenlängenbereich: mittlerer bis ferner IR-Bereich (3 µm bis 12 µm) |
| 6. | 1. Wellenlängenbereich: mittlerer bis ferner IR-Bereich (3 µm bis 12 µm) | 2. Wellenlängenbereich: sichtbarer Bereich (380 nm bis 780 nm) |

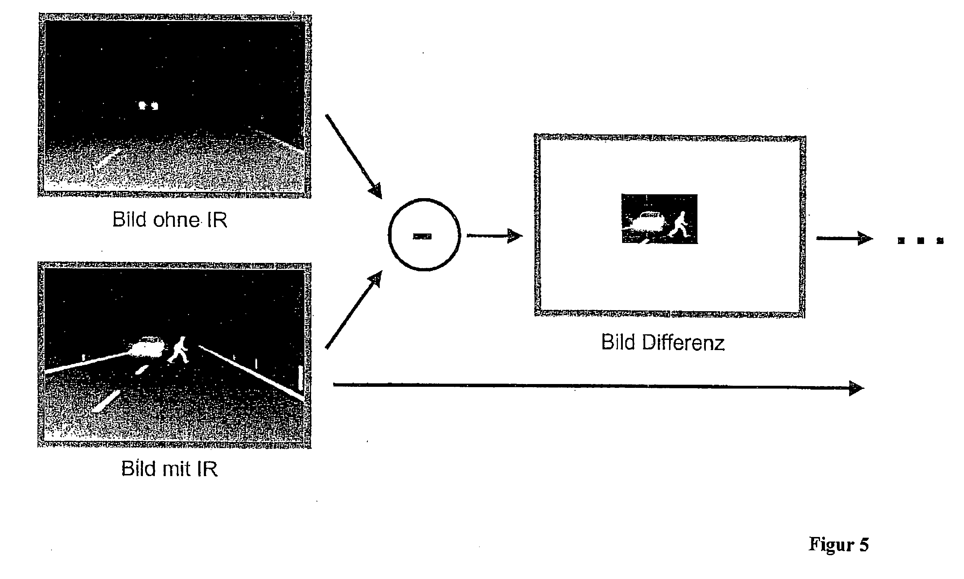

**Figur 5** zeigt oben ein Bild, das ohne IR-Belichtung - also nur mit normaler Scheinwerferbeleuchtung - aufgenommen wurde, während unten das zeitgleich oder zumindest quasi zeitgleich mit IR-Belichtung aufgenommene Bild dargestellt ist. Rechts daneben ist das Differenzbild dargestellt, welches in einer Ausführungsvariante vorzugsweise markiert und in ein Gesamtbild eingefügt wird, um die Aufmerksamkeit des Fahrers zu erhöhen.

## Patentansprüche

1. Nachtsichtsystem für Kraftfahrzeuge bestehend aus
- mindestens einer Kamera zur Aufnahme von Bildern der Szenerie vor dem Kraftfahrzeug,
- mindestens einer Anzeige- oder Wameinheit, die in Abhängigkeit von den mit der Kamera gewonnenen Bildinformationen angesteuert wird,
wobei
- wobei mit einer Kamera ein erstes Bild durch Empfang von Strahlung in einem ersten Wellenlängenbereich aufgenommen wird,
- mit einer Kamera mindestens ein zweites Bild durch Empfang von Strahlung in einem zweiten Wellenlängenbereich aufgenommen wird,
- des erste und der zweite Wellenlängenbereich zumindest teilweise voneinander verschieden sind,
- der erste und/oder der zweite Wellenlängenbereich zumindest teilweise im infraroten Bereich liegt,
- die Bildinformationen der beiden Bilder einer Bildverarbeitungseinheit zugeführt werden,
- die Bildinformationen dieser beiden Bilder in der Bildverarbeitungseinheit miteinander verknüpft werden,
- die Anzeige- oder Warneinheit in Abhängigkeit vom Ergebnis der Verknüpfung angesteuert wird.
- eine Kamera vorgesehen ist, die sowohl für infrarotes Licht als auch für sichtbares Licht empfindlich ist,
- mindestens ein Infrarotstrahlungssender zur Erzeugung einer aktiven IR-Beleuchtung vorgesehen ist,
**dadurch gekennzeichnet, daß**
- mit der Kamera mindestens ein Bild mit eingeschalteter IR-Beleuchtung und mindestens ein Bild mit ausgeschalteter IR-Beleuchtung aufgenommen wird.

## Claims

1. Night vision system for motor vehicles consisting of
- at least one camera for taking pictures of the scenery in front of the vehicle,
- at least one display or alert unit driven with reference to the image information gathered by means of the camera,
wherein
- a camera takes a first picture by receiving radiation within a first wave range,
- a camera takes at least a second picture by receiving radiation within a second wave range,
- the first and the second wave range at least partially differ from one another,
- the first and/or the second wave range are at least partially within the infrared range,
- the image information of the two pictures are fed to an image processing unit,
- the image processing unit links the image information of the two pictures with each other,
- the display or alert unit is driven with reference to the result of the linking operation.
- a camera is provide which is sensitive to both infrared light and visible light,
- at least one infrared radiation emitter is provided to generate active lR lighting,
**characterized in that**
- the camera takes at least one picture with IR lighting being on and at least one picture with IR lighting being off.

## Revendications

1. Système de visibilité nocturne pour véhicules automobiles comprenant
- au moins une caméra permettant l'enregistrement d'images de la situation devant le véhicule,
- au moins une unité d'affichage ou de signalisation qui est commandée en fonction des informations d'images obtenues par la caméra,
dans lequel
- une première image est enregistrée avec une caméra par la réception de rayonnement dans une première gamme d'ondes,
- au moins une deuxième image est enregistrée avec une caméra par la réception de rayonnement dans une deuxième gamme d'ondes,
- la première gamme d'ondes et la deuxième gamme d'ondes sont au moins partiellement différentes l'une de l'autre,
- la première gamme d'ondes et/ou la deuxième gamme d'ondes se trouve(nt) au moins partiellement dans la plage infrarouge,
- les informations d'images des deux images sont amenées à une unité de traitement d'images,
- les informations d'images de ces deux images sont liées les unes aux autres dans l'unité de traitement d'images,
- l'unité d'affichage et de signalisation est commandée en fonction du résultat de la liaison,
- une caméra est prévue, qui est sensible non seulement à la lumière infrarouge mais aussi à la lumière visible,
- au moins un émetteur de rayonnement infrarouge est prévu pour la génération d'un éclairage infrarouge actif,
**caractérisé en ce que**
avec la caméra, au moins une image est enregistrée avec l'éclairage infrarouge activé et au moins une image est enregistrée avec l'éclairage infrarouge coupé.
